# EUROPÄISCHE PATENTSCHRIFT

(11) **EP 4 568 848 B1**
(45) Veröffentlichungstag und Bekanntmachung des Hinweises auf die Patenterteilung: **06.05.2026**
(21) Anmeldenummer: 23744409.6
(22) Anmeldetag: 17.07.2023
(51) Int. Cl.: B60K 6/48, B60K 6/547, B60K 6/387, B60W 10/06, B60W 10/08, B60W 10/02, B60W 20/00, B60W 20/40

(54) **VERFAHREN ZUM STARTEN EINES HYBRIDFAHRZEUGS BEI TIEFEN TEMPERATUREN UND SOFTWAREMODUL**
METHOD FOR STARTING A HYBRID VEHICLE AT LOW TEMPERATURES, AND SOFTWARE MODULE
PROCÉDÉ DE DÉMARRAGE D'UN VÉHICULE HYBRIDE À BASSES TEMPÉRATURES ET MODULE LOGICIEL

(30) Priorität: 11.08.2022 DE 102022208342
(43) Veröffentlichungstag der Anmeldung: 18.06.2025
(73) Patentinhaber: Magna PT B.V. & Co. KGaA, 74199 Untergruppenbach (DE)
(72) Erfinder: YU, Yang, 74080 Heilbronn (DE); VOGT, Dominik, 74889 Sinsheim (DE); HENNINGER, Michael, 71638 Ludwigsburg (DE); BOSCH, Marco, 74182 Obersulm (DE)
(74) Vertreter: Euler, Matthias
(86) Internationale Anmeldenummer: PCT/EP2023/069793
(87) Internationale Veröffentlichungsnummer: WO 2024/033023

(56) Entgegenhaltungen:
- EP-A2- 2 848 446
- DE-A1- 102015 118 568
- DE-A1- 102018 212 943
- FR-A1- 3 132 258

## Beschreibung

Die Erfindung betrifft ein Verfahren zum Starten eines Hybridfahrzeugs bei tiefen Temperaturen, wobei das Fahrzeug eine elektrische Maschine aufweist, die durch eine Reibkupplung von einem Verbrennungsmotor getrennt werden kann.

### Stand der Technik

Hybrid-Elektrofahrzeuge sind eine Technologie beim Übergang vom konventionell angetriebenen Fahrzeug zum Elektrofahrzeug. In Hybrid- Elektrofahrzeugen wird ein Verbrennungsmotor mit einer elektrischen Maschine kombiniert, um das notwendige Antriebsmoment bereitzustellen. Der kombinierte Antrieb ermöglicht mehrere neue Fahrzustände wie Boosten, Rekuperieren oder rein elektrischen Antrieb. Die Struktur des Antriebsstrangs unterscheidet sich von der eines klassischen Antriebsstrangs.

Die Hybrid-Elektrofahrzeuge benötigen ein Batteriemanagementsystem während je nach Bauweise der Starter-Generator aufgrund des Verbaus des elektrischen Motors überflüssig ist. Um einen komfortablen Motorstart vor allem während der Fahrt zu ermöglichen, müssen die Leistungsflüsse über die Kupplungen und den elektrischen Motor richtig aufeinander abgestimmt sein.

Aus der DE 10 2018 104 472 A1 ist ein Verfahren zum Starten eines Verbrennungsmotors in einem Hybrid-Elektrofahrzeug bekannt. Das Verfahren umfasst das Ankurbeln eines Motors des Fahrzeugs, indem eine Kapazität einer Kupplung eines Doppelkupplungsgetriebes gesteuert wird, das dem Motor nachgelagert ist und durch das Ankurbeln bedingte Kraftübertragungsstörungen über eine elektrische Maschine ausgleicht, welche dem Doppelkupplungsgetriebe nachgelagert positioniert ist. Auf diese Weise kann ein Starten des Motors unter einer Vielzahl von Fahrzeugbetriebsbedingungen vorgenommen werden. Das Ankurbeln des Motors erfolgt unter Bedingungen, unter denen eine Fahrzeuggeschwindigkeit unter einem minimalen Fahrzeuggeschwindigkeitsschwellenwert liegt, wobei der minimale Fahrzeuggeschwindigkeitsschwellenwert eine synchrone Motorleerlaufdrehzahl für ein erstes Zahnrad des Doppelkupplungsgetriebes umfasst.

Der Verbrennerstart im Stillstand ist dabei noch sehr unkritisch, wohingegen der Start des Verbrennungsmotors während der Fahrt (z.B. aus der rein elektrischen Fahrt) durch hohe Anforderungen an den Komfort und die Fahrerakzeptanz eine große Herausforderung darstellt. Um diesen Verbrennerstart möglichst gut durchzuführen, ist eine gute Abstimmung aller Antriebsstrangkomponenten unerlässlich.

Aus der DE 10 2019 211 916 A1 ist ein Verfahren zum Starten eines Verbrennungsmotors in einem Antriebsstrang eines Fahrzeugs bekannt, wobei mindestens ein Verbrennungsmotor, eine elektrische Maschine und mindestens ein Getriebe vorliegt, wobei sowohl Verbrennungsmotor als auch elektrische Maschinen über das Getriebe antriebswirksam mit Rädern des Fahrzeugs verbunden sind, wobei sowohl Verbrennungsmotor als auch die elektrische Maschine über das Getriebe antriebswirksam mit Rädern des Fahrzeugs verbunden sind, wobei sowohl auf ein Drehmoment des Antriebs als auch auf eine Radgeschwindigkeit der Räder gesteuert wird.

Bei sehr geringen Temperaturen ist der Start des Verbrennungsmotors aus dem Stillstand schwieriger. Aufgrund des entgegenwirkenden Schleppmoments in der offenen Kupplung bei Tiefkalt-Temperaturen dauert der Hochlauf der Drehzahl der elektrischen Maschine sehr lange. Durch die Temperatur ist ebenfalls die Leistung der Batterie beschränkt, womit die Hochlaufphase in etwa 3 Sekunden dauert und sich negativ auf die Startzeiten auswirkt.

DE 10 2018 129 769 A1 betrifft eine Hybrid-Antriebsanordnung für einen Antriebsstrang eines elektrisch antreibbaren Kraftfahrzeugs, insbesondere eines Hybridkraftfahrzeuges, mit einer Verbrennungskraftmaschine, einer ersten elektrischen Maschine und einer Abtriebseinrichtung. Außerdem umfasst die Hybrid-Antriebsanordnung wenigstens ein Strömungssystem, mittels dessen Wärme von einem von der ersten elektrischen Maschine erwärmten Fluid zumindest anteilig auf die Verbrennungskraftmaschine übertragbar ist, um dieser insbesondere beim Startvorgang ein erhöhtes Temperaturniveau zu verleihen.

DE 10 2020 129 524 A1 beschreibt ein Verfahren zum Starten eines Hybridfahrzeugs mit einer elektrischen Maschine und einem Verbrennungsmotor zur Erzeugung von Traktion und einer hydraulisch aktuierten Trennkupplung zur Verbindung der elektrischen Maschine und des Verbrennungsmotors vorgeschlagen,- wobei in einem ersten Schritt die elektrische Maschine auf eine Soll-Drehzahl angedreht wird,- in einem zweiten Schritt die Trennkupplung hydraulisch vorbefüllt wird,- in einem dritten Schritt die Trennkupplung befüllt und die elektrische Maschine und der Verbrennungsmotor somit zum Anschleppen des Verbrennungsmotors verbunden werden,- in einem vierten Schritt der Verbrennungsmotor gezündet wird, wobei der dritte Schritt durch ein Start-Signal eines Fahrers ausgelöst wird, wobei der erste Schritt durch ein dem Start-Signal vorauseilendes Weck-Signal ausgelöst wird.

Weiterhin beschreiben die Dokumente DE102015118568A1, FR3132258A1, EP2848446A2 und DE102018212943A1 Verfahren zum Starten eines Verbrennungsmotors in einem Hybrid-Elektrofahrzeug.

Es ist Aufgabe der Erfindung, ein Verfahren zum Starten eines Verbrennungsmotors bei sehr tiefen Temperaturen vorzuschlagen, das einfach und effizient ist.

### Beschreibung der Erfindung

Die Aufgabe wird gelöst mit einem Verfahren zum Starten eines Hybridfahrzeugs bei tiefen Temperaturen, wobei das Fahrzeug eine elektrische Maschine aufweist, die durch eine Reibkupplung von einem Verbrennungsmotor getrennt werden kann, wobei das Verfahren startet, wenn der Fahrer das Fahrzeug öffnet, wobei ein Softwaremodul in einer Steuerung bereitgestellt wird.

Es ist vorteilhaft, dass das Softwaremodul das Verfahren startet, wenn alle vorbestimmten Parameter den Startbedingungen genügen, wobei die vorbestimmten Parameter und die Startbedingungen sind:
Fahrerwunsch, aufweisend ein Starten des Verbrennungsmotors, Temperatur im Ölsumpf unter einer kritischen Temperatur, Batterieladezustand über einer Minimalschwelle, Wählhebel in der Park/Neutralposition.

Wobei das Verfahren ein Schließen der trennenden Reibkupplung und ein Herstellen der Drehverbindung mit dem Verbrennungsmotor VM um fasst, wobei der Verbrennungsmotor, VM, bis zu einer Zünddrehzahl hoch geschleppt und gezündet wird.

Die elektrische Maschine wird bei Vorliegen der Parameter auf eine vorgegebene Drehzahl für eine Dauer einer aktiven Phase geregelt.

Erfindungsgemäß nach jeder aktiven Phase eine Pause eingelegt wird, in der die vorbestimmten Parameter der Startbedingung nochmals geprüft werden.

Das Verfahren wird beendet, wenn die Abbruchkriterien vorliegen, also wenn eine der vorbestimmten Parameter den Startbedingungen nicht mehr genügt, oder die maximale Anzahl von Iterationen erreicht ist oder der Verbrennungsmotor zur Zündung ansteht.

Die Aufgabe wird auch gelöst mit einem Softwaremodul zur Durchführung des Verfahren, wobei das Softwaremodul in einer Steuerung des Fahrzeugs, des Getriebes oder der elektrischen Maschine angeordnet ist.

Erfindungsgemäß kann das Softwaremodul mit dem Starten des Fahrzeugs gestartet werden.

### Beschreibung der Figuren

Figur 1 zeigt einen Hybridantriebstrang mit Doppelkupplungsgetriebe in einer P2.5 Konstellation,
Figur 2 zeigt einen Hybridantriebsstrang in einer P2 Konstellation,
Figur 3 zeigt eine Grafik des Verfahrens über der Zeit,
Figur 4 zeigt ein Ablaufdiagramm.

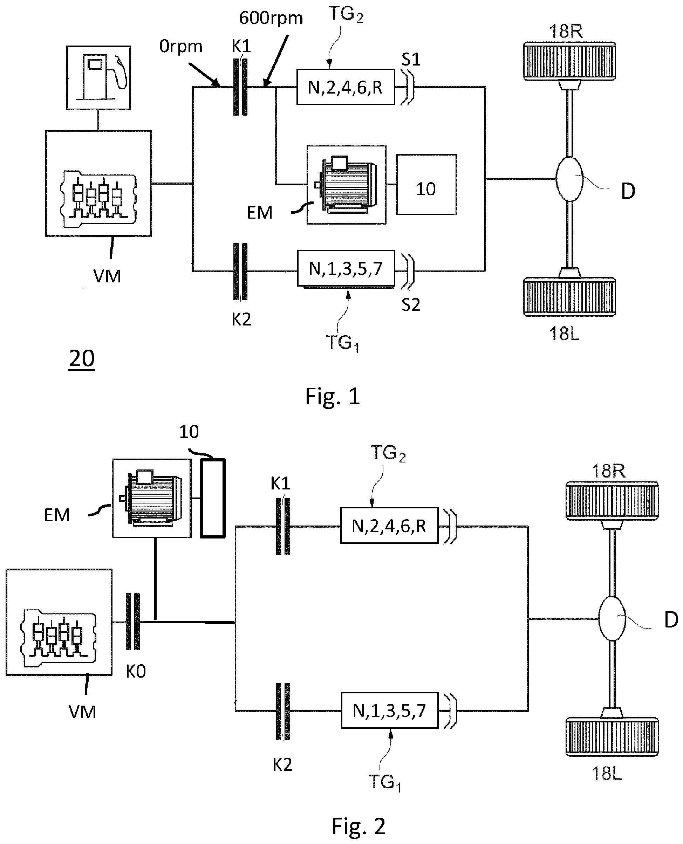

Die Figur 1 zeigt einen beispielhaften Antriebsstrang 1 in einer P2.5 Konfiguration, wie er aus dem Stand der Technik bekannt ist in einem Hybridfahrzeug 20. Ein Verbrennungsmotor VM treibt ein Getriebe 2 mit zwei Teilgetriebe TG1 und TG 2 und zwei Schaltkupplungen S1, S2, wobei die Teilgetriebe TG1 und TG2 über Kupplungen K1 und K2 vom Verbrennungsmotor VM, genauer von der Getriebeeingangswelle entkoppelbar sind.

Getriebeausgangsseitig mündet der Antriebsstrang aus beiden Teilgetrieben an einem Differential D und den beiden Rädern 18R und 18L. Am Teilgetriebe TG2 ist die elektrische Maschine EM angekoppelt. Mindestens die elektrische Maschine EM wird von einer Steuerung 10 angesteuert.

Figur 2 zeigt einen Antriebsstrang in einer P2 Konfiguration, wobei die elektrische Maschine EM außerhalb des Doppelkupplungsgetriebes an der Getriebeeingangsachse angebunden ist. Zusätzlich trennt eine Kupplung K0 als Trennelement den Verbrennungsmotor VM vom Getriebe.

Die Steuerung des erfindungsgemäßen Verfahrens erfolgt im Ausführungsbeispiel über die Steuerung 10 der elektrischen Maschine. Allerdings ist es auch möglich eine andere Steuerung des Fahrzeuges mit dem passenden Softwaremodul zu versehen und das Verfahren dort ablaufen zu lassen.

Bei Starten des Fahrzeugs aus dem Stand, das keinen Starter mehr aufweist, wird ein Impulsstart angewendet. Dabei muss die elektrische Maschine, die vom Verbrennungsmotor VM gesehen hinter einer Reibkupplung sitzt, auf Drehzahl gebracht werden. Dabei sind Drehzahlen von 10.000 Umdrehungen /min sinnvoll.

Die trennende Reibkupplung wird schnell geschlossen und stellt die Drehverbindung mit dem Verbrennungsmotor VM her. Dieser wird bis zur Zünddrehzahl hochgeschleppt und gezündet.

Das Verfahren beginnt in einer Umweltsituation, in der die Außentemperatur deutlich unter dem Gefrierpunkt liegt, im Allgemeinen unter einer Temperatur von -10°C.

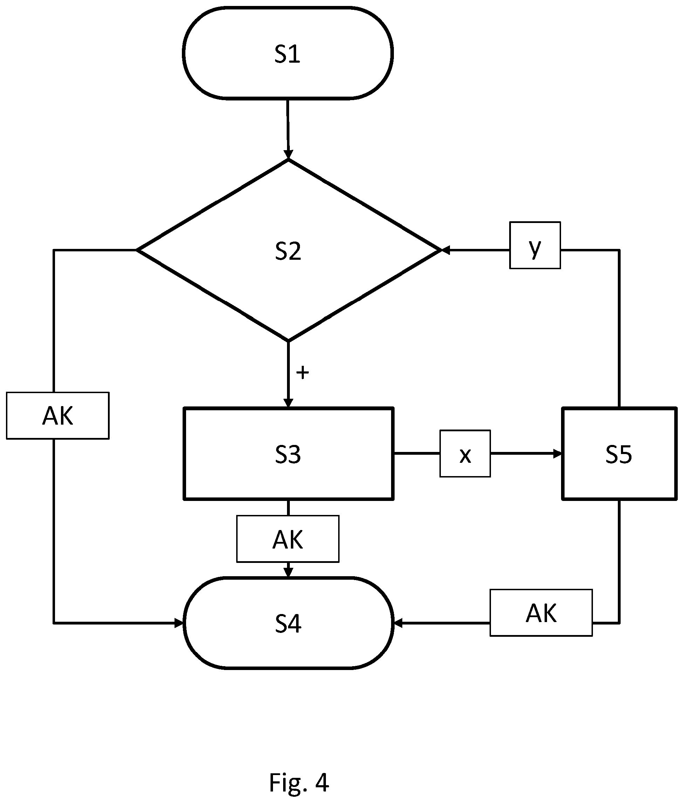

Das Verfahren ist schrittweise in der Figur 4 dargestellt. Im ersten Schritt S1 wird das Fahrzeug vom Fahrer aufgeschlossen bzw. von einem Öffnungsmechanismus geöffnet. Gleichzeitig wird ein Softwaremodul in der Steuerung 10 gestartet, das die Schritte des Verfahrens kontrolliert und die eingehenden Parameterwerte empfängt.

Das Softwaremodul wird dabei unabhängig von der Außentemperatur immer gestartet.

Das in der Steuerung 10 laufende Softwaremodul fragt im Schritt S2 folgende Parameter ab:
- Möchte der Fahrer den Verbrennungsmotor VM starten, was zu einem Impulsstart führt, oder möchte der Fahrer elektrisch anfahren.
- Wie ist die Temperatur? Die im Ölsumpf gemessenen Temperatur des Öls wird auf eine kritische Untertemperatur abgeprüft. Ist der Messwert T kleiner als T_krit ist ein weiterer Parameter für das Verfahren vorhanden.
- Wie ist die Position des Wählhebels? Es wird überprüft, ob der Wählhebel in der Park-/Neutralposition steht.
- Wie geht es der Batterie? Ein weiterer Parameter stellt der Ladezustand SOC (state of charge) der Batterien des Fahrzeugs dar. Um Tiefentladungen zu vermeiden, sollten Batterien einen Ladezustandswert nicht unter 30% aufweisen.

Sind alle Parameter für den Tieftemperatur-Start erfüllt, was in Figur 4 mit einem + gekennzeichnet ist, wird die elektrische Maschine EM auf eine voreingestellte Drehzahl gebracht.

Erfindungsgemäß wird in S3 eine Drehzahl ω gewählt, die in etwa 600 Umdrehungen pro Minute Differenzdrehzahl an der Kupplung ergibt, bei welcher das viskose Schleppmoment in der offenen Kupplung K1 schon relativ hoch ist. Aufgrund der Differenzdrehzahl werden die Kupplungslamellen und das sich dazwischen befindliche Öl durch die Reibenergie erwärmt und ausgeschleudert. Damit wird das Schleppmoment während der Drehzahl-Hochlaufphase der elektrischen Maschine für den nachfolgenden Impulsstart signifikant reduziert.

Nach einer bestimmten Dauer x des Betriebs der elektrischen Maschine wird im Schritt S5 eine Pause der Dauer y eingelegt. Das Softwaremodul springt zum Schritt S2 zurück und überprüft die Parameter für den weiteren Ablauf.

Sind die Voraussetzungen für das Verfahren seit dem Beginn immer noch gegeben, werden die Schritte S3 und S5 wiederholt.

Erst, wenn eines der Parameter im Schritt S2 nicht mehr unter die Auswahlkriterien fallen oder der Verbrennungsmotor VM vor der Zündung steht oder die voreingestellte Anzahl an Wiederholungen erreicht ist, wird das Verfahren beim Vorliegen der Abbruchkriterien AK in S4 beendet

Damit verkürzt sich die Hochlaufzeit des Verbrennungsmotors VM signifikant.

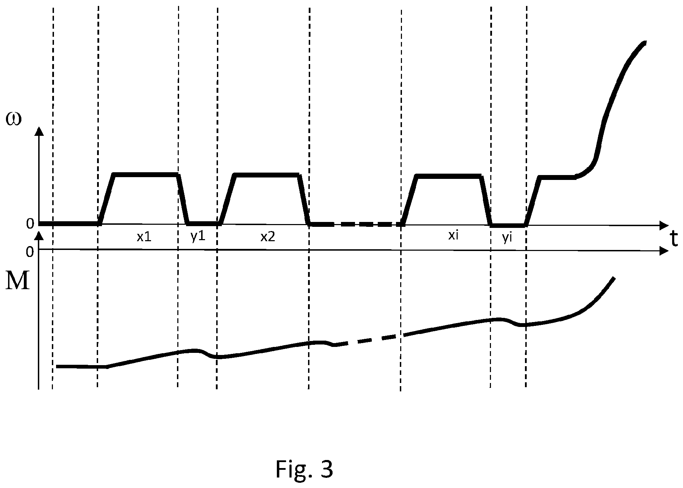

In Figur 3 ist die Drehzahl ω der elektrischen Maschine EM im oberen Bereich über die Zeit aufgetragen. Der untere Graph zeigt die Entwicklung des Reibmoments M über der Zeit.

Das Verfahren beginnt mit einer offenen Kupplung zwischen elektrische Maschine EM und Verbrennungsmotor VM. Mit dem Vorliegen der Startparameter wird die Drehzahl der elektrischen Maschine EM für einen Zeitraum in einer aktiven Phase x1 hochgefahren. Die Pause y1 ist zeitlich kürzer als die aktive Phase x1 der elektrischen Maschine EM. In dieser Pause y1 ist vor allem wichtig, zu prüfen, ob der Ladezustand der Batterie noch in Ordnung ist. Dann beginnt eine weitere Iteration bis zur aktiven Phase xi und der Pause yi.

Das Schleppmoment der Kupplung hat über die Iterationen dann schon deutlich abgenommen.

Am Ende der Pause yi wird der Impulsstart des Verbrennungsmotors initiiert und die Kupplung K1 geschlossen.

Ein zusätzlicher Vorteil ist, wenn der Verbrennungsstart während der aktiven Phase xi getriggert wird. Das Hochlaufen beginnt dann von einer Drehzahl der elektrischen Maschine statt von Null, sodass die Hochlaufzeit nochmal verkürzt ist.

## Patentansprüche

1. Verfahren zum Starten eines Hybridfahrzeugs (20) bei tiefen Temperaturen, wobei das Hybridfahrzeug (20) eine elektrische Maschine, EM, aufweist, die durch eine Reibkupplung, K1, K0, von einem Verbrennungsmotor, VM, getrennt werden kann, wobei das Verfahren startet, wenn der Fahrer das Hybridfahrzeug (20) öffnet, wobei ein Softwaremodul in einer Steuerung (10) gestartet wird und das Softwaremodul das Verfahren startet, wenn alle vorbestimmten Parameter den Startbedingungen genügen, wobei die vorbestimmten Parameter und die Startbedingungen sind:
Fahrerwunsch, aufweisend ein Starten des Verbrennungsmotors, VM,
Temperatur im Ölsumpf unter einer kritischen Temperatur,
Batterieladezustand über einer Minimalschwelle,
Wählhebel in der Park-/Neutralposition,
und wobei das Verfahren ein Schließen der trennenden Reibkupplung und ein Herstellen der Drehverbindung mit dem Verbrennungsmotor VM umfasst, wobei der Verbrennungsmotor, VM, bis zu einer Zünddrehzahl hochgeschleppt und gezündet wird, **dadurch gekennzeichnet, dass**
die elektrische Maschine, EM, bei Vorliegen der Parameter auf eine vorgegebene Drehzahl, ω, für eine Dauer einer aktiven Phase, x1...xi, geregelt wird, und wobei nach jeder aktiven Phase, x1...xi, eine Pause, y1...yi, eingelegt wird, in der die vorbestimmten Parameter der Startbedingung nochmals geprüft werden.

2. Verfahren nach Anspruch 1, wobei das Verfahren beendet wird, wenn Abbruchkriterien, AK, vorliegen, also wenn eine der vorbestimmten Parameter den Startbedingungen nicht mehr genügt, oder die maximale Anzahl von Iterationen (i) erreicht ist oder der Verbrennungsmotor, VM, zur Zündung ansteht.

3. Softwaremodul zur Durchführung des Verfahren nach einem der Ansprüche 1 oder 2, wobei das Softwaremodul in einer Steuerung (10) des Hybridfahrzeugs (20), des Getriebes oder der elektrischen Maschine, EM, angeordnet ist.

4. Softwaremodul nach Anspruch 3, wobei das Softwaremodul vor dem Starten des Hybridfahrzeugs (20) gestartet werden kann.

## Claims

1. Method for starting a hybrid vehicle (20) at low temperatures, wherein the hybrid vehicle (20) has an electric machine, EM, which can be separated from an internal combustion engine, VM, by a friction clutch, K1, K0, wherein the method starts when the driver opens the hybrid vehicle (20), wherein a software module in a controller (10) is started and the software module starts the method when all predetermined parameters satisfy the starting conditions, wherein the predetermined parameters and the starting conditions are:
driver request, comprising starting the internal combustion engine, VM,
temperature in the oil sump below a critical temperature,
battery state of charge above a minimum threshold,
selector lever in the park/neutral position,
and wherein the method comprises closing the separating friction clutch and establishing the rotational connection to the internal combustion engine VM, wherein the internal combustion engine, VM, is cranked up to an ignition rotational speed and fired, **characterized in that**,
when the parameters are present, the electric machine, EM, is regulated to a specified rotational speed, ω, for a duration of an active phase, x1...xi, and wherein a pause, y1...yi, is inserted after each active phase, x1...xi, the predetermined parameters of the starting condition being checked again in the pause.

2. Method according to Claim 1, wherein the method is ended when termination criteria AK are present, that is to say when one of the predetermined parameters no longer satisfies the starting conditions, or the maximum number of iterations (i) is reached or the internal combustion engine, VM, is scheduled for firing.

3. Software module for carrying out the method according to either of Claims 1 and 2, wherein the software module is arranged in a controller (10) of the hybrid vehicle (20), of the gearbox or of the electric machine, EM.

4. Software module according to Claim 3, wherein the software module can be started before the hybrid vehicle (20) is started.

## Revendications

1. Procédé de démarrage d'un véhicule hybride (20) à basses températures, le véhicule hybride (20) comportant une machine électrique (EM), qui peut être séparée d'un moteur à combustion interne (VM) par un embrayage à friction (K1, K0), le procédé démarrant lorsque le conducteur ouvre le véhicule hybride (20), un module de logiciel étant démarré dans une commande (10) et le module de logiciel démarrant le procédé, lorsque tous les paramètres prédéterminés satisfont les conditions de démarrage, les paramètres prédéterminés et les conditions de démarrage étant :
souhait du conducteur, comprenant un démarrage du moteur à combustion interne (VM),
température dans le carter d'huile inférieure à une température critique,
niveau de charge de la batterie supérieur à un seuil minimum,
levier de sélection dans la position de stationnement/point mort,
et le procédé comprenant une fermeture de l'embrayage à friction de séparation et une réalisation de la liaison rotative au moteur à combustion interne (VM), le moteur à combustion interne (VM) étant amené jusqu'à une vitesse d'allumage et étant allumé, **caractérisé en ce que**
la machine électrique (EM) est régulée à une vitesse de rotation prédéterminée (w) pendant une durée d'une phase active (x1...xi) en présence des paramètres et, après chaque phase active (x1...xi), une pause (y1...yi) est faite, dans laquelle les paramètres prédéterminés de la condition de démarrage sont vérifiés à nouveau.

2. Procédé selon la revendication 1, le procédé étant terminé lorsque des critères d'arrêt (AK) sont présents, c'est-à-dire lorsque l'un des paramètres prédéterminés ne satisfait plus aux conditions de démarrage, ou lorsque le nombre maximum d'itérations (i) est atteint ou que l'allumage du moteur à combustion interne (VM) est imminent.

3. Module de logiciel pour la mise en œuvre du procédé selon l'une des revendications 1 ou 2, le module de logiciel étant disposé dans une commande (10) du véhicule hybride (20), de la boîte de vitesses ou de la machine électrique (EM).

4. Module de logiciel selon la revendication 3, le module de logiciel pouvant être démarré avant le démarrage du véhicule hybride (20).
